# EUROPEAN PATENT SPECIFICATION

(11) **EP 3 078 290 B1**
(45) Date of publication and mention of the grant of the patent: **06.04.2022**
(21) Application number: 16164468.7
(22) Date of filing: 08.04.2016
(51) Int. Cl.: A43B 13/12, A43B 1/02, A43B 13/22

(54) **SOLE FOR A SPORTS SHOE**
SOHLE FÜR SPORTSCHUHE
SEMELLE POUR UNE CHAUSSURE DE SPORT

(30) Priority: 10.04.2015 US 201514683616
(43) Date of publication of application: 12.10.2016
(73) Proprietor: adidas AG, 91074 Herzogenaurach (DE)
(72) Inventor: Arnese, Carl, Portland, OR 97217 (US); Goussev, Stanislav, 91074 Herzogenaurauch (DE); George, Kelli Amelia, Portland, OR 97217 (US)
(74) Representative: Bardehle Pagenberg Partnerschaft mbB Patentanwälte Rechtsanwälte

(56) References cited:
- WO-A1-2015/122978
- WO-A1-2016/115156
- US-A1- 2002 157 281
- US-A1- 2003 226 280
- US-A1- 2011 219 643
- US-A1- 2011 283 567
- US-A1- 2012 297 557
- US-B1- 6 430 844
- US-B1- 8 647 460

## Description

### FIELD OF THE INVENTION

The present invention relates to a sole for a sports shoe, to a sports shoe comprising such a sole, and to a method of manufacturing such a sole.

### BACKGROUND

Sports shoes usually comprise a shoe upper and a sole attached to the shoe upper. The upper is for example made from textile materials, such as woven fabrics, nonwoven fabrics, meshes, knit textile, or similar. Such textile materials are based on suitable yarns and fibers, such as polyester. In some applications, leather or artificial leather is used instead of textile materials. The sole is permanently attached to the upper and usually comprises an abrasion resistant, ground-contacting outsole, e.g. based on rubber or plastic, a cushioning midsole, e.g. based on ethylene vinyl acetate (EVA) or polyurethane (PU) foam, and optionally an insole providing comfort for the foot.

A disadvantage of such a conventional sole structure is its rather heavy weight due to the use of two rather thick layers (outsole and midsole) made from dense and heavyweight materials. Furthermore, manufacturing such a sole structure requires a considerable number of manufacturing steps, such as molding the outsole, molding the midsole, gluing the outsole to the midsole, optionally manufacturing the insole, and optionally attaching the insole to the midsole.

Therefore, it has been proposed to replace parts of a sole by textiles. For example, US 2,391,564 relates to a sole comprising a platform made of fibrous, absorbent or porous material which is cut to the outline of the desired sole and has fled parallel top and bottom surfaces. Covering the platform is a member made of either woven, knitted or braided fabric.

US 2004/0107603 A1 provides an indoor cloth wrap sole by providing a bottom layer of cloth and an upper layer of rubber or plastic. The upper layer and the bottom layer are heat pressed together to form a compound structure. The bottom layer includes thick and compact knitting fabrics with a slight embossing structure.

US 8,464,383 B2 relates to a method for making a shoe outsole comprising placing rubber against a coating of cured rubber cement on a segment of fabric, heating the rubber to a temperature below the melting points of the cured rubber cement and the rubber, but high enough to render the cured rubber cement and the rubber tackily adherent to each other and vulcanizing the rubber, thereby to adhere the segment of fabric to the rubber, and cooling the vulcanized rubber to form an outsole having an exposed ground-contacting surface that includes the segment of fabric.

DE 100 37 728 C1 relates to a shoe, in particular a running shoe, and a method for its manufacture. The shoe comprises a light upper for accommodation and support of the foot and a sole which is formed by a net-like structure, wherein vertical sub-portions of the net-like structure are embedded into the sole and wherein the net-like structure interacts with the ground. The net-like structure is formed by a three-dimensional knit fabric of fibers made of one or more different materials. < insert page 2a >

Soles comprising textile elements known in the prior art, however, have the disadvantage of having a lower friction and/or traction than shoes having a molded outsole made from e.g. rubber. It is therefore the object of the present invention to provide a lightweight sole having a high friction and/or traction and that can easily be manufactured.

This object is fulfilled by the sole according to claim 1, the shoe according to claim 8 and the method of manufacturing a sole according to claim 9.

### SUMMARY

This summary is a high-level overview of various embodiments of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

According to all embodiments of the present invention, a sole for a shoe comprises a first sole element, and a second sole element comprising a textile material, wherein the second sole element is coupled to the first sole element and < US 2003/0226280 A1 is directed to a textile-soled footwear. The article of footwear has a moldably attached upper and an outsole having a textile layer integrally embedded in an outsole layer at the ground-contacting surface. In a preferred embodiment, the outsole has treads to which the textile outsole layer is moldably conformed. The treads can be laid out in any desired pattern and provide improved slip resistance.

US 2011/0219643 A1 relates to an outsole with an embedded fabric layer and method of manufacturing the same. The fabric layer is porous and allows melted plastic material to pass through. The outsole is made of melted plastic material, is attached to the top surface of the fabric layer and has a bottom surface and multiple non-slip protrusions.

US 8,647,460 D1 relates to a shoe having a bottom with bonded and molded-in particles. A sole, which is sufficiently durable and/or strong for long-term outdoor use, forms at least a portion of the bottom surface, and an upper portion extends above the sole. A plurality of small material particles are bonded to at least a portion of the bottom surface of the shoe.

US 2011/0283567 A1 concerns a bottom body of a footwear object with a footwear body, comprising an outsole layer defining a bottom surface which is adapted for having direct contact with the ground and a connecting surface opposite to the bottom surface arranged for connecting to the footwear body. A fabric unit is integrally provided on the bottom surface of the outsole layer which defines a fabric portion, whereby the fabric unit is capable of providing abrasion resistance in both smooth and oil-containing ground surface.

US 6,430,844 B1 relates to an outsole for a shoe, especially a house slipper, having an outer layer constituted of a fabric material, and a backing layer constituted of a shape-retaining, moldable material. The fabric layer and the backing layer are molded integrally together to provide the outsole with increased slip resistance, quieter usage and increased shape retention. > arranged to at least partially cover the first sole element. At least one of the first sole element and the second sole element comprise protrusions, wherein at least a portion of the second sole element is configured to contact an adjacent surface when the sole is attached to an upper. The portion of the second sole element that contacts the adjacent surface generates an amount of at least one of friction and traction between the sole and the adjacent surface, and the protrusions are configured to increase the amount of the at least one friction and traction generated between the sole and the adjacent surface.

In certain embodiments, the amount of the at least one friction and traction generated by the portion of the second sole element is greater than an amount of the at least one friction and traction generated by a portion of the first sole element when the adjacent surface is the ground or a sports ball.

In some embodiments, the second sole element is made from yarns. The yarns may be based on natural or manmade fibers including polyester, high tenacity polyester, polyamide, metal yarns, stretch yarns, carbon yarns, glass yarns, polyethylene or polyolefin yarns, bi-component yarns, PTFE yarns, Ultra-high-molecular-weight polyethylene yarns, liquid crystal polymer yarns, specialty decorative yarns or reflective yarns or any of these yarns coated with EVA hot melt, TPU, PU, rubber or otherwise coated with a polymer.

In certain embodiments, the second sole element may be made from a knit textile. In further embodiments, the second sole element is a braided material, a woven fabric, nonwoven fabric or created by tailor fiber placement.

According to some embodiments, the second sole element may comprise at least one first area with less stretch than an adjacent area. The second sole element may further comprise at least one second area with more stiffness than an adjacent area, and/or at least one third area with more traction than an adjacent area, and/or at least one fourth area with a looser knit structure than an adjacent area, and/or at least one fifth area where the second sole element is thicker than in an adjacent area.

In some embodiments, the sole comprises a third sole element, which extends between the first sole element and the second sole element.

Some embodiments comprise a shoe comprising the sole as described above.

According to all embodiments of the present invention, a method of manufacturing a sole comprising a first sole element and a second sole element comprising a textile material, wherein at least one of the first sole element and the second sole element comprise protrusions comprises coupling the second sole element to the first sole element so that the second sole element is arranged to at least partially cover the first sole element. At least a portion of the second sole element is configured to contact an adjacent surface when the sole is attached to an upper. The portion of the second sole element that contacts the adjacent surface generates an amount of at least one of friction and traction between the sole and the adjacent surface, and the protrusions are configured to increase the amount of the at least one friction and traction generated between the sole and the adjacent surface.

The textile material of the second sole element may be attached to the first sole element without any glues or adhesives.

In some embodiments, the method further comprises injection molding the first sole element in midsole shape, heating the first sole element to 100-140 °C, placing the first sole element together with the textile material of the second sole element in a mold at 120-150 °C, pressing the first sole element and the textile material of the second sole element for 10-60 seconds, and removing the produced sole from the mold and cooling.

In certain embodiments, after injection molding the first sole element, the first sole element is washed to create a surface of the midsole that is slightly more porous. The first sole element may be made of EVA. At least one insert may be placed in the mold to prevent flattening the structured surface during the molding process, and the insert may be a silicone insert.

### BRIEF DESCRIPTION OF THE DRAWINGS

The patent or application file contains at least one drawing executed in color.

In the following detailed description, embodiments of the invention are described referring to the following figures:
Fig. 1A is a lateral view of a sole, according to certain embodiments of the present invention.
Fig. 1B is a medial view of the sole of Fig. 1A.
Fig. 2 is a perspective view of a sole with studs, according to certain embodiments of the present invention.
Fig. 3 is a perspective view of a sole, according to certain embodiments of the present invention.
Figs. 4A-4D are various views of a sole with two textile layers, according to certain embodiments of the present invention.
Fig. 5 is a schematic illustration of a second sole element with different areas with specific properties, according to certain embodiments of the present invention.
Fig. 6 is a perspective view of a sole with a second sole element comprising areas with different colors, according to certain embodiments of the present invention.
Fig. 7 is a schematic illustration of a shoe comprising a sole, according to certain embodiments of the present invention.
Fig. 8 is a schematic illustration of a shoe comprising a sole, according to certain embodiments of the present invention.
Fig. 9 is a schematic illustration of a sole, according to certain embodiments of the present invention.
Fig. 10 is a schematic illustration of a shoe comprising a sole, according to certain embodiments of the present invention.
Fig. 11 is a cut-out of a sole, according to certain embodiments of the present invention.
Fig. 12 is a perspective view of a mold for manufacturing a sole, according to certain embodiments of the present invention.
Fig. 13 is a perspective view of the mold of Fig. 12.
Fig. 14 is a perspective view of a mold insert for placing in the mold of Fig. 12.
Fig. 15 is a perspective view of the mold insert of Fig. 14 placed in the mold of Fig. 12.

### BRIEF DESCRIPTION

According to all aspects of the present invention, a sole for a sports shoe is provided, comprising: (a.) a first sole element; and (b.) a second sole element attached to the first sole element, wherein (i.) the second sole element is arranged to at least partially cover the first sole element, wherein (ii.) the second sole element is configured to be able to get into contact with a surrounding surface when the sole is attached to an upper (iii.) the second sole element is a textile material; and (c.) the first sole element and/or the second sole element comprise protrusions to increase the friction and/or traction of the sole to the surrounding surface .

Surrounding surface in the scope of this invention can be for example the surface of the ground or of a sports equipment good, especially a sports ball.

The sole according to the present invention is particularly lightweight because it dispenses with a heavy outsole. Instead, two sole elements are used, wherein the second sole element is a lightweight textile material being considerably lighter than a conventional outsole. The first sole element may be made from a conventional midsole material, such as EVA. Thus, in total, the weight of the sole according to the invention is less than that of a conventional sole.

The sole according to the present invention enables it to use just one tooling for manufacturing the complete sole. It is possible to manufacture the sole with one mold. For example it becomes possible, first to produce the first sole element and then combine the first sole element with the second sole element in one and the same mold.

To provide stability, support, and bending and torsional stiffness comparable to that of conventional soles, the second sole element is arranged to at least partially cover the first sole element. Thus, by "wrapping" the first sole element with the textile material of the second sole element, the sole becomes stable and stiff just like a conventional sole. It is possible that the first sole element is fully contained in the second sole element, by wrapping around the second sole element. It is also possible that the first sole element partially exposes through the second sole element.

To increase the friction and/or traction of the sole according to the invention to the surrounding surface, the first sole element and/or the second sole element comprise protrusions. Thus, the sole is provided with a tread-like and/or stud-like structure. In this way, friction and/or traction of the sole is considerably improved. The protrusions allow the first sole element and/or the second sole element to fulfil the function of a conventional outsole. It is possible that the first sole element comprises protrusions and the second sole element does not comprise protrusions. For example the second sole element could be a flat textile material, which is molded around a shaped first sole element, for example around a midsole. Vice versa the first sole element could not comprise protrusions and the second sole element does comprise protrusions. Further it is possible that both, the first sole element and the second sole element comprise protrusions.

The first sole element partly extends through the second sole element. Thus, relative movements between the first sole element and the second sole element (for example during fast and abrupt changes in direction) may be avoided or a least minimized.

It is also possible that the sole comprises a third sole element. The third sole element could be arranged between the first sole element and the second sole element, for example as a mid-layer. The third sole element could be permanently attached to the first sole element, for example by stitching, gluing or welding. The third sole element could be for example designed as a rubber plate, as a plate made of any kind of polymer, as an arrangement of cleats or as another plate which could comprise protrusions. Further it is possible, that the third sole element is designed as a functional spike plate. It is possible that the first sole element comprises a flat bottom surface without protrusions, whereby the third sole element comprises protrusions. It is possible that the third sole element supersedes the first sole element and interacts with the second sole element.

It is possible that the sole is designed that second sole element and the first sole element are being able to get into contact with a surrounding surface when the sole is attached to an upper. This could be the case if protrusions are designed on the first sole element and/or the third sole element and extending through the second sole element.

A high friction and/or traction is a achieved by the inventive sole due to protrusions formed directly on the first sole element and/or protrusions formed on the third sole element and/or by the design of the second sole element (textile material).

The first sole element may be permanently attached to the second sole element. This provides a firm connection between both sole elements and the second sole element may provide a high degree of stiffness and stability to the first sole element.

The second sole element may provide a greater friction and/or traction with the surrounding surface compared to the first sole element. Thus, the second sole element not only improves stiffness and stability of the entire sole, but also improves friction and/or traction.

The second sole element may be arranged on the side of the first sole element which faces the surrounding surface when the sole is integrated into a shoe. In this way, the second sole element will contact the ground when the sole is attached to an upper and may improve friction and/or traction of the shoe, e.g. by using suitable yarns, such as rubberized or rubber yarns.

The second sole element is at least partially arranged on a lateral side of the first sole element. If the sole is attached to an upper of a shoe for ball sports, such as soccer, the lateral arrangement of the second sole element advantageously increases the friction with the ball, e.g. during kicks.

The second sole element may completely cover the side of the first sole element which faces the surrounding surface when the sole is attached to an upper. Thus, the second sole element provides stiffness and stability over the entire length of the sole.

The second sole element may be configured to at least partly cover an upper of a shoe to which the sole is attached. Thus, a strong connection is provided between the upper and the sole. This arrangement, where the second sole element extends from sole to upper, offers lateral stability. Furthermore, this arrangement may improve friction and/or traction of the upper, e.g. by using suitable yarns, such as rubberized or rubber yarns. This is in particular advantageous for sports shoes for ball sports, such as soccer.

The second sole element may be made from yarns. The yarns may be based on natural or manmade fibers including polyester, high tenacity polyester, polyamide, nylon, cordura, metal yarns, stretch yarns, spandex yarns, carbon yarns, glass yarns, polyethylene or polyolefin yarns, PTFE yarns, Ultra-high-molecular-weight polyethylene (UHMWPE) yarns, liquid crystal polymer yarns, specialty decorative yarns or reflective yarns. Any of these yarns may be coated with EVA hot melt, TPU, PU, rubber or otherwise coated with a polymer. These yarns may provide specific functions to the sole. For example, the use of rubber yarns increases friction and/or traction, whereas the use of reflective or decorative yarns improves the optical appearance of the sole.

It is also possible that the second sole element may be made from bi-component yarns, which are formed of at least two thermoplastic polymer materials arranged in a core-sheath relationship, whereby a first material forms a central portion and a second material surrounds the central portion. Bi-component yarns may be formed to have materials with different properties. For example the used materials may be selected that the first material has a higher melting temperature than the second material. Raising the temperature of such a yarn to a point above the melting temperature of the second material, but below the melting temperature of the first material, will cause melting only the second material. The first and the second material may both be for example polyester, e.g. with different melting temperatures. It is possible that the first material may be nylon and the second material may be polyurethane. In addition to the core-sheath relationship in bi-component yarns, materials may be arranged in a side-by-side configuration, or any other configuration wherein different distinct areas of yarns includes different materials.

The second sole element may be made from a knit textile. The knit textile may readily be manufactured on a corresponding machine in the desired shape of the second sole element, i.e. with almost no waste. Furthermore, the knit textile may be provided with specific functions and targeted locations by programming the knitting machine accordingly. The knit textile may be a warp knit or a weft knit. For example the weft knit could be flat knitted or circular knitted. For example the warp knit can be an engineered knit.

The second sole element may be a braided material, a woven fabric, nonwoven fabric or created by tailor fiber placement. These techniques can be performed by corresponding machines which may also provide specific functions at targeted locations by programming the machine accordingly.

The second sole element may comprise multiple textile layers. Different textile layers may add different functions to the sole. For example, one layer may improve the stiffness of the entire sole, whereas the other layer may improve traction and/or friction.

At least two textile layers may comprise different yarns. Different yarns may provide different properties to the layers. For example, a rubberized rubber yarn may be used in a first textile layer to improve friction and/or traction, whereas a rather inelastic yarn may be used in a second textile layer to improve the stiffness and stability of the sole.

The textile layers may cover each other at least partially. Thus, the functions of the textile layers may add in the overlap area.

The textile layers may be sandwiched, engineered from a single constructed fabric, highly stable/non stretch, 2-way stretch, or 4-way stretch. The use of sandwiched layers improves the stiffness of the sole. Engineered textile layers allow for specific functions at targeted locations of the sole. 2-way stretch material is rather inelastic in one direction and more elastic in an orthogonal direction. 4-way stretch material is rather inelastic in a first and a second orthogonal direction, but rather elastic in a third and fourth orthogonal direction. Thus, the elasticity of the sole may be predetermined by a corresponding orientation of the 2-way or 4-way stretch material relative to the first sole element.

The second sole element may comprise areas with different properties. Examples of areas with advantageous properties are given in the following.

The second sole element may comprise at least one first area with less stretch than a surrounding area. The first area may be located in a toe area and/or a heel area of the sole. Thus, stability is improved during the landing and push-off phase of the gait cycle.

The second sole element may comprise at least one second area with more stiffness than a surrounding area. The second area may be located in a midfoot region of the sole. In this way the midfoot region and in particular the arch of the foot is provided with stiffness, stability and support.

The second sole element may comprise at least one third area with more traction than a surrounding area. The third area may be located in a heel region of the sole. Thus, friction and/or traction is improved during the landing-phase of the gait cycle. Slippage of the sole is reduced.

The second sole element may comprise at least one fourth area with a looser knit structure than a surrounding area. The fourth area may be located in a region between a heel region and a midfoot region of the sole. Thus, the heel region may be decoupled from the remainder of the sole. This reduces the propagation of forces along the sole and may provide additional cushioning to the sole.

The second sole element may comprise at least one fifth area where the second sole element is thicker than in a surrounding area. The fifth area may be located in a midfoot region of the sole. Thus, additional support is provided to the arch of the foot. A further aspect of the present invention relates to a shoe, in particular a sports shoe, comprising a sole as described before.

A still further aspect of the present invention relates to a method of manufacturing a sole, comprising the steps of: (a.) providing a first sole element; and (b.) attaching a second sole element to the first sole element, such that the second sole element is arranged to at least partially cover the first sole element, and such that the second sole element is configured to be able to get into contact with a surrounding surface when the sole is attached to an upper, wherein the second sole element is a textile material; wherein (c.) the first sole element and/or the second sole element comprise protrusions to increase the friction and/or traction of the sole to the surrounding surface.

The textile material of the second sole element may be attached to the first sole element without any secondary glues or adhesives. Nevertheless, glues or adhesives may additionally be used.

The method according to the present invention enables it to use just one tooling for manufacturing the complete sole. It is possible to manufacture the sole with one mold. For example it becomes possible, first to produce the first sole element and then combine the first sole element with the second sole element in one and the same mold.

The method may further comprise the steps of injection molding of the first sole element in midsole shape, heating the first sole element to a temperature range of 100-140 °C, which may further be in a temperature range of 110-115 °C, placing the first sole element together with the textile material of the second sole element in a mold at a temperature range of 120-150 °C, which may further be at a temperature range of 135-145 °C, pressing the first sole element and the textile material of the second sole element for a range of 10-60 seconds, which may further be for a range of 25-40 seconds, and removing the produced sole from the mold and cooling. This sequence of steps and of parameters has shown to be particularly advantageous to produce a compound sole, wherein the textile material shows a very good bonding to the first sole element without unintentionally flattening the yarns of the textile material. It is also possible that the first sole element may be molded directly with the textile material of the second sole element immediately after removing from the compression or injection mold, by placing the textile material against the first sole element and moving the created sole to a second mold.

After injection molding of the first sole element, the first sole element may be washed to create a surface of the midsole which is slightly more porous.

The first sole element may be made of EVA.

At least one insert may be placed in the mold to avoid that the structured surface, i.e. a yarn radius, is flattened during the molding process.

The at least one insert may be a silicone insert. Silicone inserts have been shown to provide for good heat conduction while being sufficiently heat resistant.

A business model of the sole according to the invention could be that consumers design their own look for the textile element of the second sole element. For example it could be possible that consumers create via a web tool (online platform) a certain pattern or certain pictures which they want to have on the textile material of the second sole element. Afterwards the consumers can then send their designs to the shoe manufacturer. This could happen automatically, for example by the web tool. Afterwards in the factory it is possible to produce a shoe with a sole, which comprises a first sole element and a second sole element, whereby the second sole element is based on the creative design of the consumer. It is also possible that consumers design their own textile material (e.g. pattern, colored) and upload it on an online platform, where other consumers can buy the designed textile material. The tooling of the inventive method of manufacturing a sole enables it to combine a first sole element with an arbitrary amount of textile materials by using the same mold.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

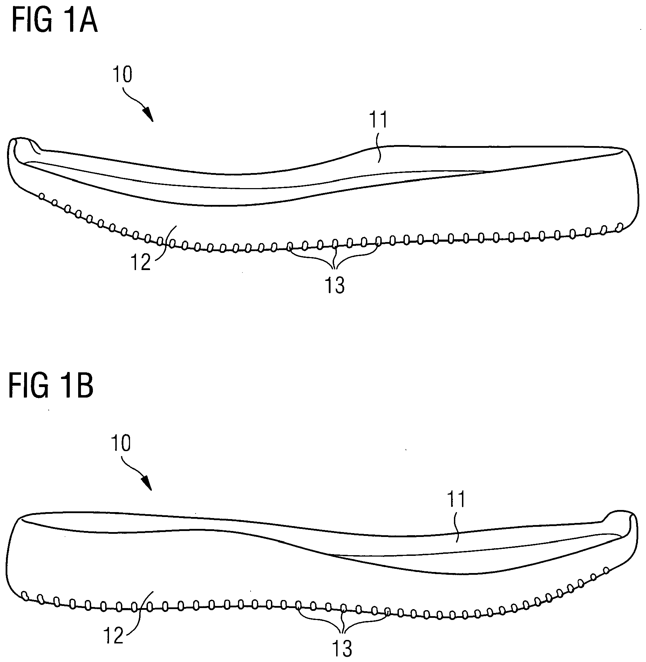

Figures 1A and 1B show a lateral and medial view, respectively, certain embodiments of a sole 10 according to the invention. The sole 10 comprises a first sole element 11. This first sole element 11 may be made from a conventional midsole material, such as ethylene vinyl acetate (EVA) or thermoplastic polyurethane (PU). Alternatively or additionally, advanced materials such as foamed pellets, for example based on expanded TPU (eTPU) or expanded Polyether Block Amide (ePEBA) can be used. In the exemplary embodiments of Figures 1A and 1B, the first sole element 11 supports the entire foot, i.e. it extends from the toes to the heel and from the medial side to the lateral side of the foot. However, it is also possible that in other embodiments, the first sole element 11 only covers part of the foot, e.g. only a forefoot portion, only a midfoot portion, only a heel portion, etc.

The sole 10 according to the invention also comprises a second sole element 12. This second sole element 12 is attached to the first sole element 11 by molding the first sole element 11 and the second sole element 12 together in a mold under heat and/or pressure as will be described in more detail below. ,

In the exemplary embodiments of Figures 1A and 1B, the second sole element 12 covers the bottom side, medial and lateral sides and the toe and heel portions of the first sole element 11. It is also possible that the second sole element 12 covers the first sole element 11 only partially. For example, the second sole element 12 may cover only a toe portion, a midfoot portion, or a heel portion of the first sole element 11. Also, the second sole element 12 may cover only the lateral side, only the medial side, or both sides of the first sole element 11. Also, the mentioned portions may be covered partially by the second sole element 12. It is also possible that the second sole element 12 completely covers the first sole element 11 and that the first sole element 11 is fully surrounded by the second sole element 12. In general, the second sole element 12 may specifically cover portions of the first sole element 11 where certain functions are desired, such as stability, torsional and/or bending stiffness, traction, friction, etc.

It is also possible that the second sole element 12 is configured to at least partly cover an upper of a shoe (not shown in the Figures 1A and 1B), to which the sole 10 is attached. Thus, the textile material of the second sole element 12 may extend at least partially over the upper. The portions of the textile material covering the upper may be fixed to the upper e.g. by gluing, stitching, welding, etc.

Coming back to Fig. 1, the second sole element 12 is configured to touch the ground or a sports ball when the sole 10 is attached to the upper. As shown in the exemplary embodiments of Figures 1A and 1B, the second sole element 12 covers the bottom side, medial and lateral sides and the toe and heel portions of the first sole element 11. Thus, the second sole element 12 is configured to touch the ground when the sole 10 is attached to the upper. Furthermore, since the side portions of the first sole element 11 are also covered by the second sole element 12, the second sole element 12 is also configured to touch a sports ball, for example when a user wearing a shoe into which the sole 10 is integrated kicks a ball.

As shown in Figures 1A and 1B, the second sole element 12 is a textile material. In the exemplary embodiments of Figures 1A and 1B, this textile material is a mesh. The diameter of the mesh openings in the exemplary embodiments of Figures 1A and 1B is a few millimeters. Smaller or larger diameters could be used as well. Furthermore, the textile material may be made from yarns. For example, the textile material may be a knit textile (warp or weft knit), a braided material, a woven fabric, created by tailor fiber placement, etc. Also, it is possible that the textile material is a non-woven fabric made from suitable fibers.

In general, the yarns used for the textile material of the second sole element 12 may be based on natural or manmade fibers including polyester, high tenacity polyester, polyamide, nylon, cordura, metal yarns, stretch yarns, spandex yarns, carbon yarns, glass yarns, polyethylene or polyolefin yarns, PTFE yarns, Ultra-high-molecular-weight polyethylene (UHMWPE) yarns, liquid crystal polymer yarns, specialty decorative yarns or reflective yarns. Any of these yarns may be coated with EVA hot melt, TPU, PU, rubber or otherwise coated with a polymer. The yarns may be coated as in some of the mentioned examples, or may not be coated. The yarns may be chosen to provide greater friction and/or traction. Rubber or rubber-covered yarns, for example, may provide improved traction. In general, the second sole element 12 may provide a greater friction and/or traction with the ground and/or sports ball compared to the first sole element 11. The yarns may be chosen to provide adhesion to the midsole in lieu of adhesives or in conjunction with adhesives or with adhesives and primers.

It is also possible that the second sole element 12 may be made from bi-component yarns, which are formed of at least two thermoplastic polymer materials arranged in a core-sheath relationship, whereby a first material forms a central portion and a second material surrounds the central portion. Bi-component yarns may be formed to have materials with different properties. For example the used materials may be selected that the first material has a higher melting temperature than the second material. Raising the temperature of such a yarn to a point above the melting temperature of the second material, but below the melting temperature of the first material, will cause melting only the second material. The first and the second material may both be for example polyester, e.g. with different melting temperatures. It is possible that the first material may be nylon and the second material may be polyurethane. In addition to the core-sheath relationship in bi-component yarns, materials may be arranged in a side-by-side configuration, or any other configuration wherein different distinct areas of yarns includes different materials. The first sole element 11 and the second sole element 12 comprise protrusions. Three of these protrusions are exemplary denoted with the reference numeral 13 in Figures 1A and 1B, respectively. The protrusions 13 serve to increase the friction and/or traction of the sole 10 to the ground or to a sports ball. In the exemplary embodiments of Figures 1A and 1B the protrusions 13 are bump-shaped with a size of a few millimeters. In general, the protrusions 13 may have an arbitrary geometry, e.g. round, angled, pyramid-shaped, stud-like, bolt-like, etc. Also, the size of the protrusions 13 may vary from e.g. a few millimeters to a few centimeters.

The protrusions 13 increase friction and/or traction to the ground and/or a sports ball, because the contact surface of the sole according to the invention is smaller than the contact surface of a flat sole. Thus, the pressure exerted on the protrusions 13 is increased as is the friction. Furthermore, on rather soft ground or a rather soft sports ball, the protrusions 13 may penetrate the ground or surface of the ball at least partially, thereby improving traction or "grip".

In the exemplary embodiments of Figures 1A and 1B both the first sole element 11 and the second sole element 12 comprise protrusions. As the second sole element 12 covers the first sole element 11 completely on its bottom side and sidewalls, the protrusions of the first sole element 11 can only be indirectly seen as protrusions 13 of the second sole element 12. Thus, there is a one-to-one correspondence between the protrusions of the first sole element and the protrusions 13 of the second sole element. In general, however, there could be no such correspondence and the second sole element 12 could have protrusions which do not correspond to protrusions of the first sole element 11 and vice versa.

In general, only the first sole element 11 may comprise protrusions, only the second sole element 12 may comprise protrusions, or both the first sole element 11 and the second sole element 12 may comprise protrusions. In this way a high friction and/or traction is achieved.

In the exemplary embodiments of Figures 1A and 1B the protrusions 13 extend from the toe portion over a midfoot portion to the heel portion and from the lateral side to the medial side of the sole 10. Thus, the protrusions 13 extend over the entire bottom side of the sole 10. In general, protrusions of the first sole element 11 and of the second sole element 12 may cover only a portion of the sole 10. For example, the protrusions may cover only a toe portion, a midfoot portion or a heel portion of the sole 10. Also, the protrusion may cover only the sidewalls of the sole 10. A sprint shoe, for example, may comprise protrusion in the forefoot area only.

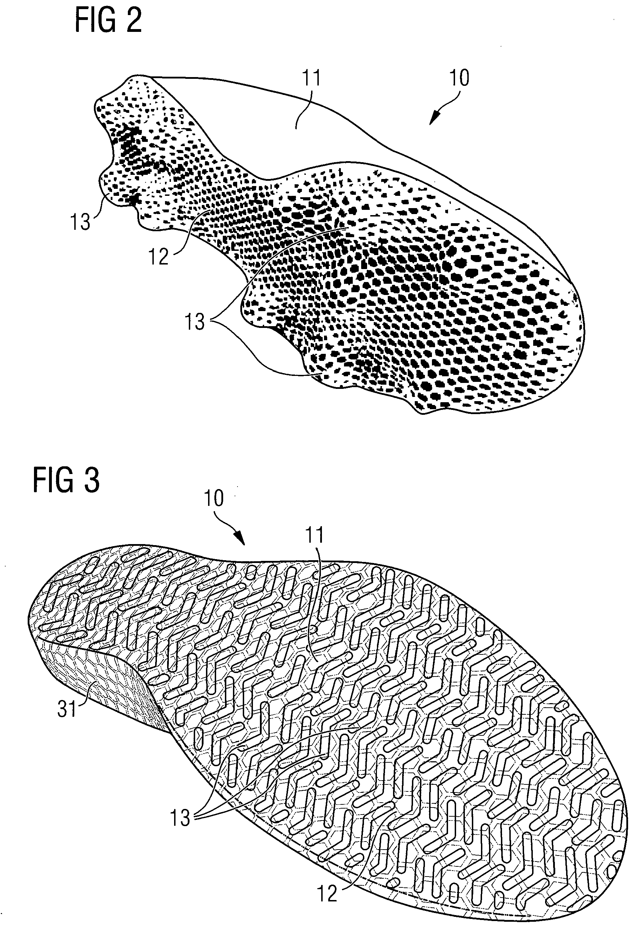

Fig. 2 shows a further exemplary embodiments of a sole 10 according to the invention which is configured to be integrated into a soccer shoe. Accordingly, the first sole element 11 and the second sole element 12 comprise protrusions in the form of studs, three of which are denoted with the reference numeral 13 in Fig. 2. The studs are arranged in the heel and toe portions of the sole 10. In general, studs may be arranged in other portions of the sole 10 as well, e.g. the midfoot portion. The textile material of the second sole element 12 in Fig. 2 is a mesh having openings with a diameter of a few millimeters. Different textile materials may be used as explained with respect to Fig. 1. Also, what has been said with respect to the relative arrangement of the first sole element 11 and the second sole element 12 in the context of Fig. 1 is true for the exemplary embodiments of Fig. 2 as well.

In the exemplary embodiments of Fig. 2 the first sole element 11 comprises a high stiffness and is more like a plate. This is usually desired with soccer shoes.

The sole 10 shown in Fig. 2 is not only suitable for soccer shoes, but may be used for rugby or American football shoes as well. In general, the sole 10 according to the present invention is not limited to any kind of sports, but may be used for a wide variety of shoes for different sports, such as running, basketball, volleyball, golf, tennis, to name just a few examples.

Fig. 3 shows yet another exemplary embodiments of a sole 10 according to the present invention. In this example the textile material of the second sole element 12 is again mesh comprising openings with a diameter of a few millimeters. Different textile materials may be used as explained with respect to Fig. 1. In this example the second sole element 12 does not comprise any protrusions at all. Rather, the first sole element 11 comprises bump-like protrusions, three of which are exemplary denoted with the reference numeral 13 in Figure 3. These protrusions have a size of a few millimeters comparable to the size of the mesh openings of the textile material of the second sole element 12. As shown in Fig. 3, the textile material of the second sole element 12 covers the entire bottom side of the first sole element 11 and the medial side wall 31. What has been said with respect to the relative arrangement of the first sole element 11 and the second sole element 12 in the context of Fig. 1 is true for the exemplary embodiments of Fig. 3 as well.

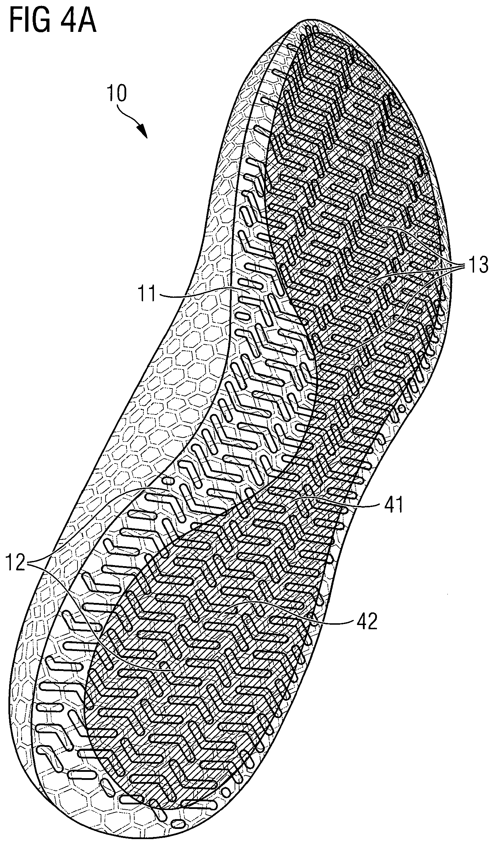

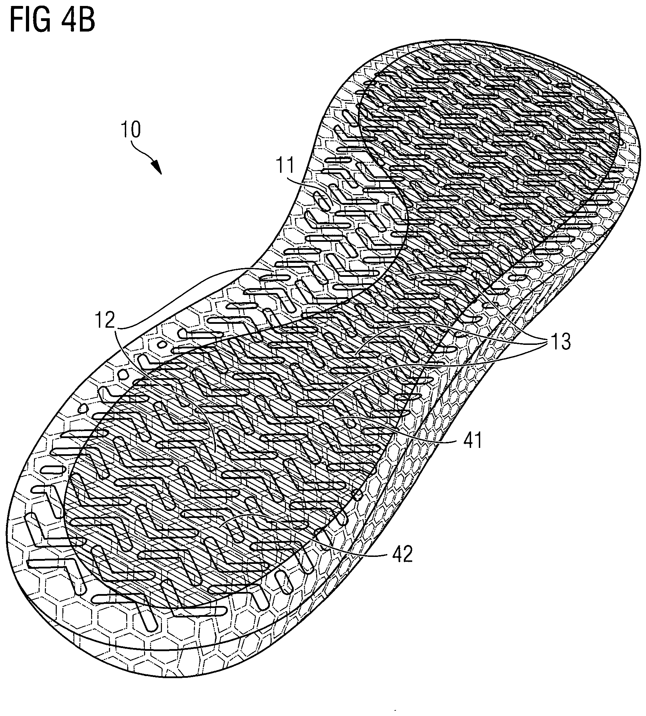

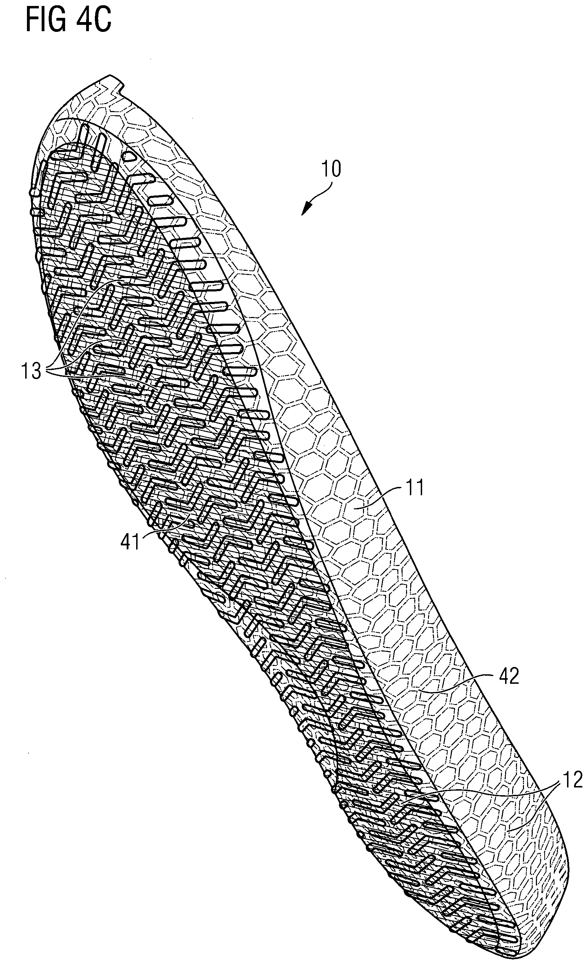

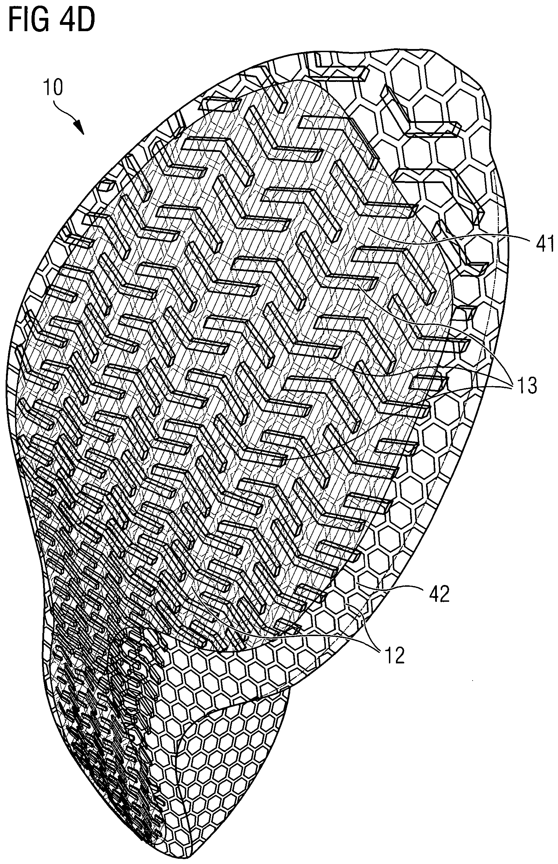

Figures 4A, 4B, 4C and 4D show another exemplary embodiments of a sole 10 according to the invention. In this particular example the second sole element 12 comprises multiple textile layers 41 and 42. The first layer 41 is arranged on the bottom side of the first sole element 11. More specifically, the first layer 41 extends from the toe portion over the midfoot portion to the heel portion of the first sole element 11, wherein the area under the arch of the foot is not covered by the first layer 41. The first layer 41 comprises a textile material with a rather uniform and closed loop structure. Thus, the first sole element 11 is not visible through the first layer 41 of the second sole element 12. In general, however, the first layer 41 may comprise any type of textile material and what has been said with respect to the textile material in the context of Fig. 1 is valid for the example of Figures 4A, 4B, 4C and 4D as well. In general, the textile layers 41 and 42 may e.g. be sandwiched, engineered from a single constructed fabric, highly stable/non stretch, 2-way stretch, 4-way stretch, etc.

The second sole element 12 comprises a second layer 42 comprising a mesh-like or lattice-like structure with openings of a few millimeters. The second layer 42 covers the bottom side, medial and lateral sides and the toe and heel portions of the first sole element 11. In particular, the second layer 42 covers the first layer 41 completely. However, it is also possible that the second layer 42 covers the first layer 41 only partially. Also, what has been said with respect to the arrangement of the second sole element 12 relative to the first sole element 11 in the context of Fig. 1 is valid for the first layer 41 and the second layer 42 of Figures 4A, 4B, 4C and 4D as well.

The first sole element 11 comprises protrusions, three of which are exemplary denoted with the reference numeral 13 in Figures 4A, 4B, 4C and 4D. As the first layer 41 of the second sole element 12 follows the shape of the first sole element 11, corresponding protrusions 13 are formed in the first layer 41 as well.

The first layer 41 and the second layer 42 may have different colors. Thus, the invention allows to provide a lightweight sole with an appealing, iconic design. It should be noted that a different number of layers may be used, for example three layers. Thus, using multiple layers, the design possibilities are numerous.

Furthermore, the two textile layers 41 and 42 shown in Figures 4A, 4B, 4C and 4D may comprise different yarns, i.e. the layers may not only differ with respect to color. For example, the yarn of the first textile layer 41 may be a rubberized yarn providing high friction and good traction in the areas where the first textile layer is located. The yarn of the second textile layer 42 may be rather inelastic comprise a high tensile strength to provide stiffness and stability to the sole 10.

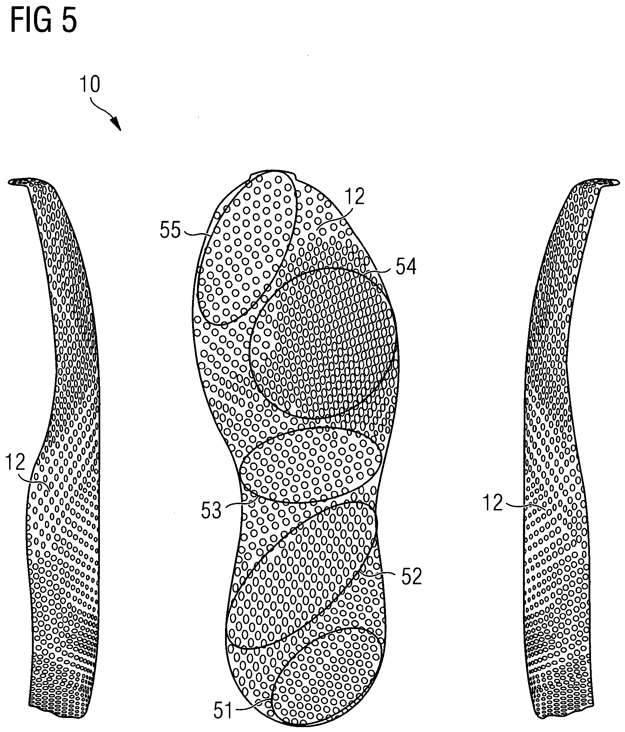

Fig. 5 shows a schematic illustration of additional exemplary embodiments of a sole 10 according to the invention, wherein the left side shows a medial view, the middle shows a bottom view and the right side shows a lateral view of the sole 10.

In the exemplary embodiments of Fig. 5 the textile material of the second sole element 12 is based on a knit textile. The knit textile comprises areas with different properties. In the heel area 51 the knit textile comprises less stretch to cope with the forces which occur when the wearer of the shoe into which the sole 10 is to be integrated touches the ground during a gait cycle. Thus, the heel area 51 is also denoted as a "landing zone". Also, in the area 51 the structure provides more traction than in the adjacent area 52.

In the area 52 between the heel area 51 and the midfoot area 53 the knit textile comprises a loser knit structure to decouple the landing zone 51.

In the midfoot area 53 the knit structure is denser and more closed, or maybe also be thicker, than surrounding areas to provide a high torsional stiffness and more stability in this area. Thickness could for example range from 0.5 mm to 8.0 mm in different areas.

In the area 54 between the toe area 55 and the midfoot area 53 the knit textile comprises less knit than surrounding areas to allow for stretch. This supports the flexing of the toes during the push-off-phase of the gait cycle.

Finally, in the toe area 55 the knit textile comprises more yarns, a tighter knit and less stretch to support the toes during the push-off-phase. Furthermore, due to the knit structure, the area 55 comprises more traction than the adjacent area 54.

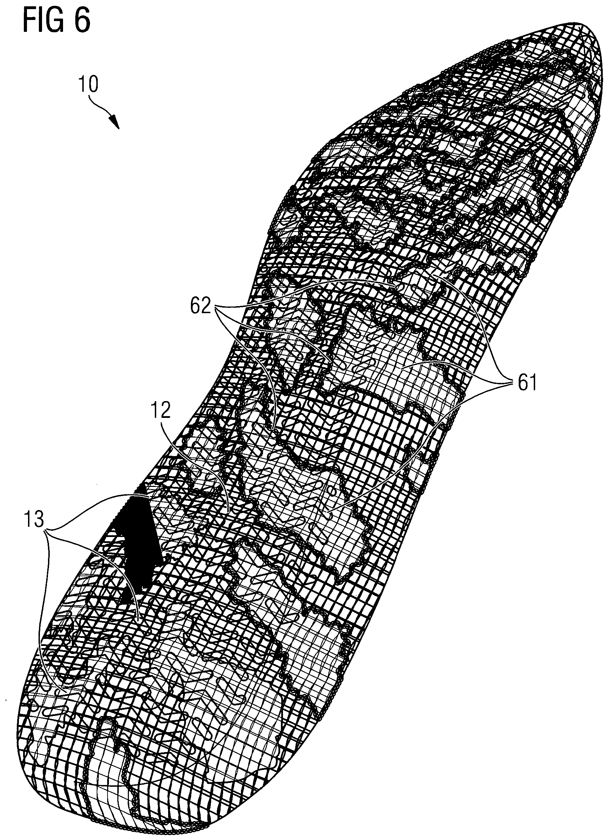

Fig. 6 shows further exemplary embodiments of a sole 10 according to the present invention. In this example the second sole element 12 comprises a weft knit textile material, in particular a circular knit textile material. The knit textile can comprise areas with different colors. The different colors are provided by yarns having different colors and different structures. Thus for example in the areas exemplarily denoted by the reference numeral 61 a rather light coated yarn has been used. The areas 61 are surrounded by border areas 62 having a black yarn. The remainder of the second sole element 12 comprises a non-coated multifilament-yarn with a medium-light color. The design may be changed for different aesthetic effects.

The second sole element 12 could also comprise a Jacquard circular knit textile. When a Jacquard circular knit textile is used, yarns could be selected for specific purposes and the pattern could be modified to create grip/traction in areas where they are needed. By this, different yarns can be placed at any place to create a certain color pattern. It is also possible to use more than three different yarns to create different patterns.

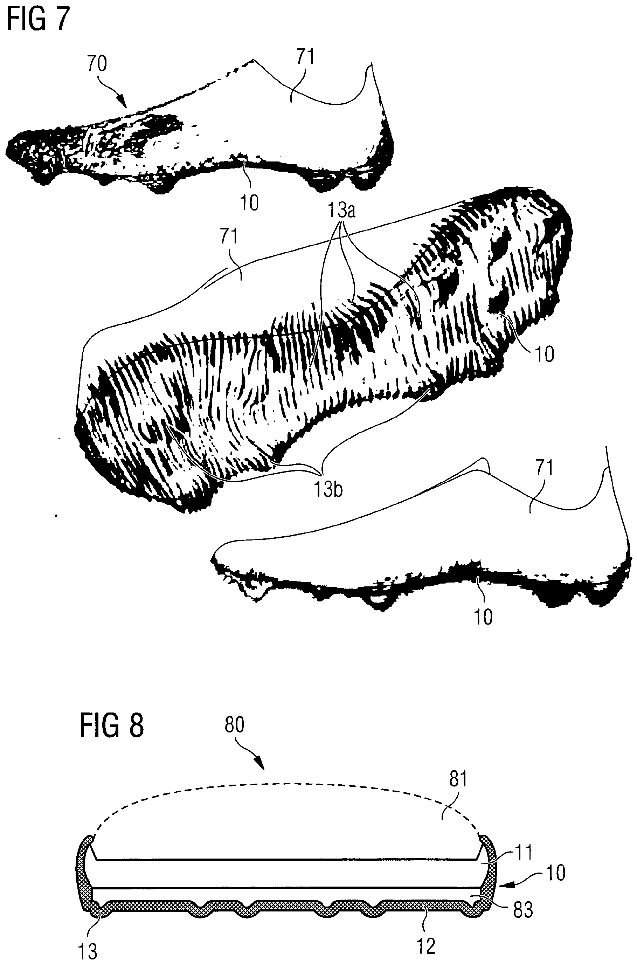

Fig. 7 shows a schematic illustration of further exemplary embodiments of a sports shoe 70 comprising a sole 10 according to the present invention. In the exemplary embodiments of Fig. 7 the shoe is a soccer shoe. However, as explained before, the present invention may be applied to any kind of sport shoes.

The shoe 70 comprises a sole 10 as described before and an upper 71. The upper 71 can be made from conventional textile materials, leather or artificial leather. The sole 10 can be stitched, glued, welded or otherwise be fixed to the upper 71. Also it is possible to mold the sole 10 to the upper 71. As the shoe 70 is a soccer shoe, the first sole element 11 (not shown in Fig. 7) is a rather stiff plate. The stiff plate could be for example an injected polymer plate.

The second sole element 12 comprises a knit textile, which may be a warp knit textile. The knit textile comprises protrusions of a size between 0 and 3 mm, three of which are exemplarily denoted with the reference numeral 13a in Fig. 7a. Thus, the knit textile provides for improved traction of the sole 10. As in particular shown in the illustration in the middle of Fig. 7, the knit textile extends to the lateral and medial side of the shoe 70. Thus, by the structure of the knit textile a zone with high friction is provided to allow for good control of a ball. Friction and/or traction can further be improved by using rubberized or a rubber yarn.

The first sole element 11 as well as the second sole element 12 furthermore comprise protrusions in the form of studs, three of which are denoted exemplarily by the reference numeral 13b. These studs 13b provide for good traction on grounds which are usually used for playing soccer, such as turf and artificial turf. The studs 13b are provided on the first sole element 11 (not shown in Fig. 7), whereby the second sole element 12 covers the studs and adapts to the form of the studs. Thus, the sole 10 comprises two different types of protrusion, namely the smaller protrusions 13a and the studs 13b.

Fig. 8 shows a schematic illustration of a cross-sectional view of a further exemplary embodiments of a sports shoe 80 comprising a sole 10 according to the present invention. In the exemplary embodiments of Fig. 8 the shoe is a running shoe. However, as explained before, the present invention may be applied to any kind of sport shoes.

The shoe 80 comprises a sole 10 as described before and an upper 81. The upper 81 can be made from conventional textile materials, leather or artificial leather. The sole 10 can be stitched, glued, welded or otherwise be fixed to the upper 81. The first sole element 11 is designed as a midsole, for example an EVA midsole. The second sole element 12 comprises a knit textile as described above. A third sole element 83 is arranged between the first sole element 11 and the second sole element 12, for example as a mid-layer. The third sole element 83 could be for example designed as a rubber plate, as a plate made of any kind of polymer, as an arrangement of cleats or as another plate which could comprise protrusions 13. Further it is possible, that the third sole element 83 is designed as a functional spike plate. It is possible that the first sole element 11 comprises a flat bottom surface without protrusions, whereby the third sole element 83 comprises protrusions 13. Also it is possible that the first sole element 11 and the third sole element 83 comprise protrusions 13. It is also possible that the protrusions 13 extend through the second sole element 12, whereby the protrusions 13 would be visible from the outside. The third sole element 83 could be designed to penetrate the textile material of the second sole element 12.

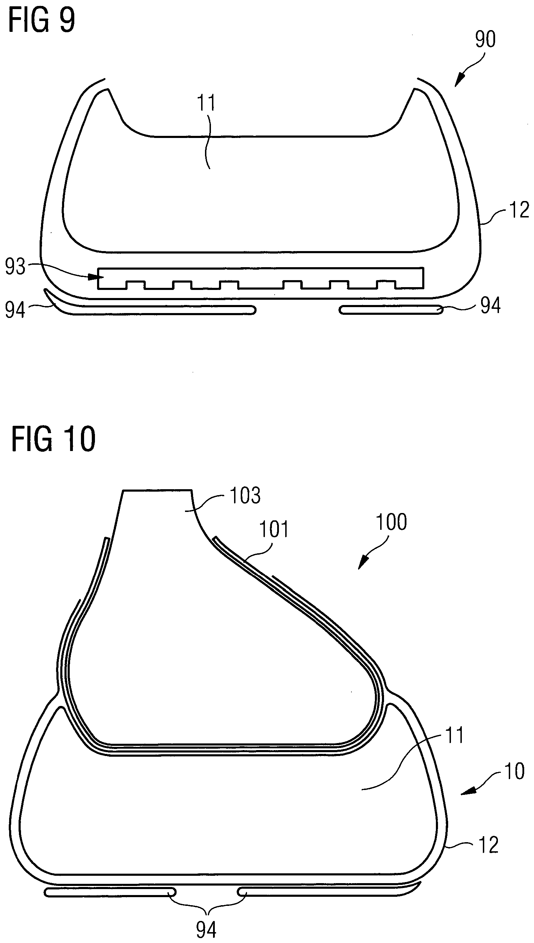

Fig. 9 shows a schematic illustration of a cross-sectional view of a further exemplary embodiments of a sole 90 for a sporting shoe according to the present invention before the parts of the sole are connected to each other.

The sole 90 comprises a first sole element 11, which is designed as a midsole, for example an EVA midsole. A second sole element 12 comprises a textile material as described above. A third sole element 93 is arranged between the first sole element 11 and the second sole element 12, for example as an intermediate layer. Additionally the sole 90 according to Fig. 9 comprises a fourth sole element 94. The fourth sole element could be designed as rubber elements 94, e.g. rubber dots, or the like. It may be desirable in certain embodiments that rubber elements 94 are arranged in all areas of the foot on the textile material 12. It is also possible that the rubber elements 94 are just arranged on the heel portion and/or the midfoot portion and/or the toe portion. The rubber elements 94 could be glued or dipped to the textile material 12.

Fig. 10 shows a schematic illustration of a cross-sectional view of a further exemplary embodiments of a sports shoe 100 on a last 103. The shoe 100 comprises a sole 10 according to the present invention. In the exemplary embodiments of Fig. 110 the shoe is a running shoe. However, as explained before, the present invention may be applied to any kind of sport shoes.

The shoe 100 comprises a sole 10 as described before and an upper 101. The upper 101 can be made from conventional textile materials, leather or artificial leather. The sole 10 can be stitched, glued, welded or otherwise be fixed to the upper 101. The first sole element 11 is designed as a midsole, for example an EVA midsole. The second sole element 12 comprises a knit textile as described above. The fourth sole element 94 comprises rubber elements. According to the embodiments of Fig. 10 the second sole element 12 is wrapped around the first sole element 11 and also partly covers the upper 101. It is possible that the second sole element 12 extends to the upper 101 in multiple zones. The extending from the second sole element 12 to the upper 101 offers additional traction and lateral stability.

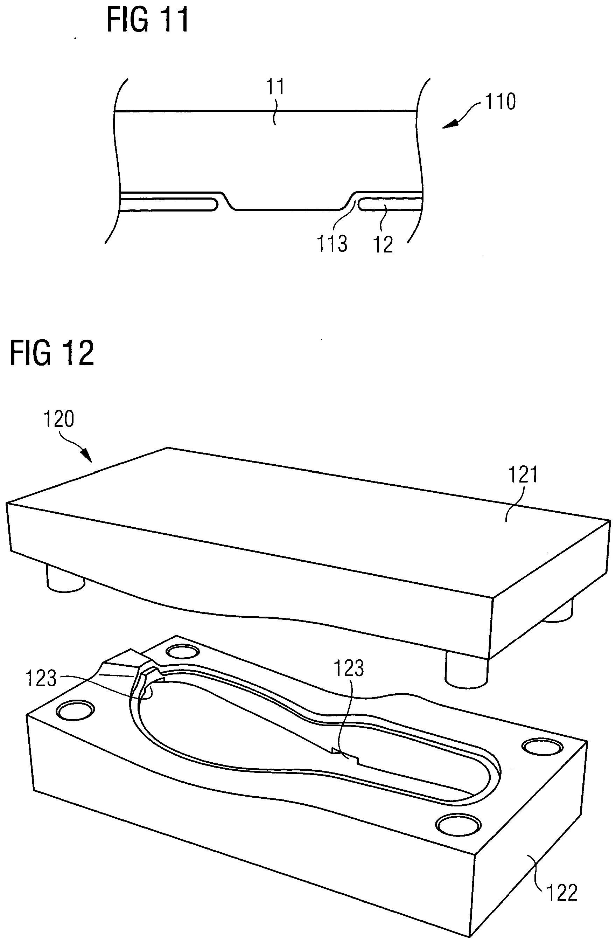

Fig. 11 shows a cut-out of further exemplary embodiments of a sole 110 for a sporting shoe according to the present invention. The sole 110 comprises a first sole element 11, which is designed as a midsole, for example EVA, eTPU or ePEBA midsole. A second sole element 12 comprises a textile material as described above. As shown in Fig. 11 the first sole element 11 partly exposes through the second sole element 12. For this reason it is possible that the second sole element 12 comprises openings 113 through which the first sole element 11 can extend. It is also possible that the second sole element 12 has a greater mesh size in certain regions to allow the first sole element 11 to extend through the mesh.

The sole 10 according to the present invention may be manufactured by attaching the second sole element 12 to the first sole element 11 prior to molding. Suitable molding methods comprise compression molding, injection molding or steam molding tooling. In the case of compression molding, the mold may be a steel mold. An example for a mold is shown in Fig. 12, Fig. 13 and Fig. 15. The mold is denoted with the reference numeral 120, whereby the exemplary mold 120 comprises an upper mold part 121 and a bottom mold part 122. Both parts 121, 122 comprise cavities for receiving at least the material of the first sole element 11. At least one of the parts comprises at least one injection gate.

The textile material of the second sole element 12 may be attached to the first sole element 11 without any glues or adhesives. Nevertheless, glues or adhesives may additionally be used. The material of the first sole element 11 may be EVA with an Asker C hardness of for example 55 to 65. The textile material of the second sole element 12 may be based on natural or manmade fibers including polyester, high tenacity polyester, polyamide, nylon, cordura, metal yarns, stretch yarns, spandex yarns, carbon yarns, glass yarns, polyethylene or polyolefin yarns, PTFE yarns, Ultra-high-molecular-weight polyethylene (UHMWPE) yarns, liquid crystal polymer yarns, specialty decorative yarns or reflective yarns. Any of these yarns may be coated with EVA hot melt, TPU, PU, rubber or otherwise coated with a polymer.

As mentioned above it is also possible that the second sole element 12 may be made from bi-component yarns.

In certain embodiments of the process, EVA is injection molded into a midsole shape. Afterwards the midsole is washed to create a surface of the midsole which is slightly more porous. Then the EVA midsole is heated to a temperature range of 100-140 °C, which may further be in the temperature range of 110-115 °C. Then the EVA midsole together with the textile material is placed in a silicone lined mold at a temperature range of 120-150 °C, which may further be at a temperature range of 135-145 °C, whereby the silicone comprises a temperature of about 115 °C. Afterwards the EVA midsole and the textile material are pressed for a range of 10-60 seconds, which may further be for a range of 25-40 seconds. Afterwards the produced sole is removed from mold and cooled.

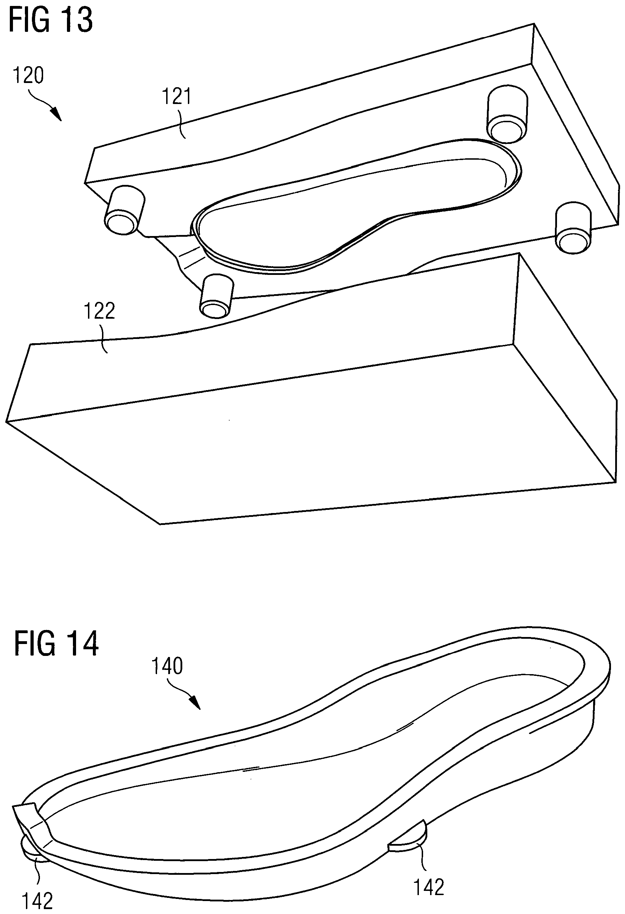

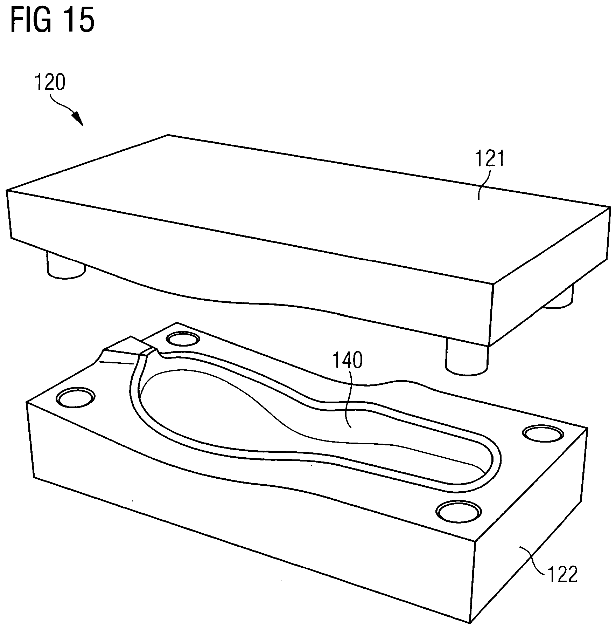

To avoid that the structured surface, i.e. a yarn radius, is flattened during the molding process, the mentioned silicone inserts are placed in the mold. An example for such an insert is shown in Fig. 14 and Fig. 15. The insert is denoted with the reference numeral 140. It has been found that this buffer layer (insert 140) avoids flattening the textile surface, while still transferring the right amount of heat. The inserts 140 fit into a generic mold cavity, created by the upper mold part 121 and the bottom mold part 122 when they are in a closed position. Fig. 15 shows the insert 140 placed in the bottom mold part 122 of the mold 120. It could be also possible that the insert 140 is placed in the upper mold part 121. It could also be possible that inserts are placed in the bottom mold part 122 and the upper mold part 121. Thereby interchangeable silicone mold liners can be used as inserts 140. The silicone mold liner 140 matches to each midsole geometry. By using different inserts 140 with different sizes (especially different wall thicknesses) it is possible to create an arbitrary amount of different sized first sole elements just with one mold 120. Silicone mold liner 140 sidewalls could range in thickness from 2mm to not more than 9mm, and may further range in thickness from 4-6mm. Instead of silicone mold liners 140 it is possible to use other mold liners, for example polymer mold liners. As best shown in Fig. 14 the insert 140 comprises anchoring elements 142 which are able to interact with corresponding anchoring recesses 123 of the mold 120. Two of the anchoring recesses 123 are shown in Fig. 12. It may be desirable in certain embodiments that the anchoring elements 142 are designed as flat protrusions on the outer sides of the sidewalls of the insert 140 as shown in Fig. 14. It may be desirable in certain embodiments that the insert 140 comprises at least three anchoring elements 142 and that the mold comprises at least three corresponding anchoring recesses 123. The anchoring elements 142 engage into the anchoring recesses 123 when the insert 140 is placed in the mold 120 as shown in Fig. 15.

In additional embodiments, the EVA material is injection molded into midsole shape and heated to 150-160 °C when removed from the injection mold. It would be possible that afterwards the EVA midsole could be immediately combined with the textile material and pressed into mold directly after removal from injection mold, or hot washed then combined with a textile material and immediately pressed into mold while still hot.

It could be further possible to use hot melt yarns with a low melt temperature, for example 90 °C. So it would be possible to keep the EVA material at 70-90 °C without shrinkage.

Features of particular embodiments of the present invention may be incorporated into other embodiments. Specifically, all embodiments and examples described in this specification may be combined with each other, i.e. features of one embodiment and/or example together with features of another embodiment and/or example may yield a further embodiment and/or example, although the combination of these features is not explicitly mentioned herein.

Different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made within scope of the claims below.

## Claims

1. A sole (10) for a shoe comprising:
a shaped first sole element (11); and
a second sole element (12) comprising a textile material;
wherein the second sole element (12) is coupled to the first sole element (11) and arranged to at least partially cover the first sole element (11);
wherein the second sole element (12) is molded around the first sole element (11);
wherein the second sole element (12) is at least partially arranged on a lateral side of the first sole element (11);
wherein the first sole element (11) comprises protrusions (13, 13a, 13b);
wherein at least a portion of the second sole element (12) is configured to contact an adjacent surface when the sole is attached to an upper;
wherein the portion of the second sole element (12) that contacts the adjacent surface generates an amount of at least one of friction and traction between the sole (10) and the adjacent surface; and
wherein the protrusions (13, 13a, 13b) are configured to increase the amount of the at least one friction and traction generated between the sole (10) and the adjacent surface, **characterized in that** the first sole element (11) partly extends through the second sole element (12).

2. The sole (10) according to claim 1, wherein the amount of the at least one friction and traction generated by the portion of the second sole element (12) is greater than an amount of the at least one friction and traction generated by a portion of the first sole element (11) when the adjacent surface is the ground or a sports ball.

3. The sole (10) according to claim 1, wherein the second sole element (12) is made from yarns.

4. The sole (10) according to claim 3, wherein the yarns are based on natural or manmade fibers including polyester, high tenacity polyester, polyamide, metal yarns, stretch yarns, carbon yarns, glass yarns, polyethylene or polyolefin yarns, bi-component yarns, PTFE yarns, Ultra-high-molecular-weight polyethylene yarns, liquid crystal polymer yarns, specialty decorative yarns or reflective yarns or any of these yarns coated with EVA hot melt, TPU, PU, rubber or otherwise coated with a polymer.

5. The sole (10) according to claim 1, wherein the second sole element (12) is made from a knit textile, or is a braided material, a woven fabric, nonwoven fabric or created by tailor fiber placement.

6. The sole (10) according to claim 1, wherein the second sole element (12) comprises at least one first area (51, 55) with less stretch than an adjacent area and/or, wherein the second sole element (12) comprises at least one second area (53) with more stiffness than an adjacent area and/or, wherein the second sole element (12) comprises at least one third area (51) with more traction than an adjacent area and/or, wherein the second sole element (12) comprises at least one fourth area (52) with a looser knit structure than an adjacent area and/or, wherein the second sole element (12) comprises at least one fifth area (54) where the second sole element (12) is thicker than in an adjacent area.

7. The sole (10) according to claim 6, wherein the sole (10) comprises a third sole element (83; 93), which extends between the first sole element (11) and the second sole element (12).

8. A shoe comprising a sole (10) according to one of the preceding claims.

9. A method of manufacturing a sole (10) comprising a shaped first sole element (11) and a second sole element (12) comprising a textile material, wherein the first sole element (11) comprises protrusions (13, 13a, 13b), the method comprising:
coupling the second sole element (12) to the first sole element (11) so that the second sole element (12) is arranged to at least partially cover the first sole element (11) by molding the second sole element (12) around the first sole element (11), such that the second sole element (12) is at least partially arranged on a lateral side of the first sole element (11); and such that the first sole element (11) partly extends through the second sole element (12);
wherein at least a portion of the second sole element (12) is configured to contact an adjacent surface when the sole (10) is attached to an upper;
wherein the portion of the second sole element (12) that contacts the adjacent surface generates an amount of at least one of friction and traction between the sole (10) and the adjacent surface; and
wherein the protrusions (13, 13a, 13b) are configured to increase the amount of the at least one friction and traction generated between the sole (10) and the adjacent surface.

10. The method according to claim 9, wherein the textile material of the second sole element (12) is attached to the first sole element (11) without any glues or adhesives.

11. The method according to claim 9, further comprising:
injection molding the first sole element (11) in midsole shape;
heating the first sole element (11) to 100-140 °C;
placing the first sole element (11) together with the textile material of the second sole element (12) in a mold at 120-150 °C;
pressing the first sole element (11) and the textile material of the second sole element (12) for 10-60 seconds; and
removing the produced sole (10) from the mold and cooling.

12. The method according to claim 11, wherein after injection molding the first sole element (11), the first sole element (11) is washed to create a surface of the midsole that is slightly more porous.

13. The method according to claim 11, wherein the first sole element (11) is made of EVA.

14. The method according to claim 11, whereby at least one insert is placed in the mold to prevent flattening the structured surface during the molding process.

15. The method according to claim 14, wherein the insert is a silicone insert.

## Patentansprüche

1. Sohle (10) für einen Schuh, umfassend:
ein geformtes erstes Sohlenelement (11); und
ein zweites Sohlenelement (12), das ein textiles Material umfasst;
wobei das zweite Sohlenelement (12) mit dem ersten Sohlenelement (11) verbunden ist und so angeordnet ist, dass es das erste Sohlenelement (11) zumindest teilweise bedeckt;
wobei das zweite Sohlenelement (12) um das erste Sohlenelement (11) herum geformt ist;
wobei das zweite Sohlenelement (12) zumindest teilweise an einer seitlichen Seite des ersten Sohlenelements (11) angeordnet ist;
wobei das erste Sohlenelement (11) Vorsprünge (13, 13a, 13b) aufweist;
wobei zumindest ein Teil des zweiten Sohlenelements (12) so eingerichtet ist, dass es eine benachbarte Oberfläche berührt, wenn die Sohle an einem Oberteil befestigt ist;
wobei der Abschnitt des zweiten Sohlenelements (12), der die angrenzende Oberfläche berührt, ein Ausmaß von mindestens einem von Reibung und Traktion zwischen der Sohle (10) und der angrenzenden Oberfläche erzeugt; und
wobei die Vorsprünge (13, 13a, 13b) so eingerichtet sind, dass sie das Ausmaß der mindestens einen Reibung und Traktion, die zwischen der Sohle (10) und der angrenzenden Oberfläche erzeugt wird, erhöhen,
**dadurch gekennzeichnet, dass**
das erste Sohlenelement (11) sich teilweise durch das zweite Sohlenelement (12) erstreckt.

2. Sohle (10) nach Anspruch 1, wobei das Ausmaß der mindestens einen Reibung und Traktion, die durch den Abschnitt des zweiten Sohlenelements (12) erzeugt wird, größer ist als ein Ausmaß der mindestens einen Reibung und Traktion, die durch einen Abschnitt des ersten Sohlenelements (11) erzeugt wird, wenn die angrenzende Oberfläche der Boden oder ein Sportball ist.

3. Sohle (10) nach Anspruch 1, wobei das zweite Sohlenelement (12) aus Garnen hergestellt ist.

4. Sohle (10) nach Anspruch 3, wobei die Garne auf natürlichen oder künstlichen Fasern basieren, einschließlich Polyester, hochfestem Polyester, Polyamid, Metallgarnen, Stretchgarnen, Kohlenstoffgarnen, Glasgarnen, Polyethylen- oder Polyolefingarnen, Zweikomponentengarnen, PTFE-Garnen, Polyethylengarnen mit ultrahohem Molekulargewicht, Flüssigkristallpolymergarnen, speziellen dekorativen Garnen oder reflektierenden Garnen oder beliebige dieser Garne, die mit EVA-Hotmelt, TPU, PU, Gummi oder auf andere Weise mit einem Polymer beschichtet sind.

5. Sohle (10) nach Anspruch 1, wobei das zweite Sohlenelement (12) aus einem gestrickten Textil, einem geflochtenen Material, einem Gewebe, einem Vliesstoff oder durch eine maßgeschneiderte Faserplatzierung hergestellt ist.

6. Sohle (10) nach Anspruch 1, wobei das zweite Sohlenelement (12) mindestens einen ersten Bereich (51, 55) mit geringerer Dehnung als ein benachbarter Bereich aufweist und/oder, wobei das zweite Sohlenelement (12) mindestens einen zweiten Bereich (53) mit größerer Steifigkeit als ein benachbarter Bereich aufweist und/oder, wobei das zweite Sohlenelement (12) mindestens einen dritten Bereich (51) mit mehr Traktion als ein benachbarter Bereich aufweist und/oder, wobei das zweite Sohlenelement (12) mindestens einen vierten Bereich (52) mit einer lockereren Strickstruktur als ein benachbarter Bereich aufweist und/oder, wobei das zweite Sohlenelement (12) mindestens einen fünften Bereich (54) aufweist, in dem das zweite Sohlenelement (12) dicker ist als in einem benachbarten Bereich.

7. Sohle (10) nach Anspruch 6, wobei die Sohle (10) ein drittes Sohlenelement (83; 93) aufweist, das sich zwischen dem ersten Sohlenelement (11) und dem zweiten Sohlenelement (12) erstreckt.

8. Schuh umfassend eine Sohle (10) nach einem der vorhergehenden Ansprüche.

9. Verfahren zur Herstellung einer Sohle (10), die ein geformtes erstes Sohlenelement (11) und ein zweites Sohlenelement (12) umfasst, das ein textiles Material umfasst, wobei das erste Sohlenelement (11) Vorsprünge (13, 13a, 13b) umfasst, wobei das Verfahren umfasst:
Verbinden des zweiten Sohlenelements (12) mit dem ersten Sohlenelement (11), so dass das zweite Sohlenelement (12) so angeordnet ist, dass es das erste Sohlenelement (11) zumindest teilweise bedeckt, indem das zweite Sohlenelement (12) um das erste Sohlenelement (11) herum geformt wird, so dass das zweite Sohlenelement (12) zumindest teilweise auf einer seitlichen Seite des ersten Sohlenelements (11) angeordnet ist; und so, dass sich das erste Sohlenelement (11) teilweise durch das zweite Sohlenelement (12) erstreckt;
wobei zumindest ein Teil des zweiten Sohlenelements (12) so eingerichtet ist, dass es eine benachbarte Oberfläche berührt, wenn die Sohle (10) an einem Oberteil befestigt ist;
wobei der Abschnitt des zweiten Sohlenelements (12), der die angrenzende Oberfläche berührt, ein Ausmaß von zumindest Reibung oder Traktion zwischen der Sohle (10) und der angrenzenden Oberfläche erzeugt; und
wobei die Vorsprünge (13, 13a, 13b) so eingerichtet sind, dass sie das Ausmaß der mindestens einen Reibung und Traktion, die zwischen der Sohle (10) und der angrenzenden Oberfläche erzeugt wird, erhöhen.

10. Verfahren nach Anspruch 9, wobei das textile Material des zweiten Sohlenelements (12) ohne Klebstoffe oder Haftmittel an dem ersten Sohlenelement (11) befestigt wird.

11. Verfahren nach Anspruch 9, ferner umfassend:
Spritzgießen des ersten Sohlenelements (11) in Form der Zwischensohle;
Erhitzen des ersten Sohlenelementes (11) auf 100-140 °C;
Einlegen des ersten Sohlenelements (11) zusammen mit dem Textilmaterial des zweiten Sohlenelements (12) in eine Form bei 120-150 °C;
Pressen des ersten Sohlenelementes (11) und des Textilmaterials des zweiten Sohlenelementes (12) für 10-60 Sekunden; und
Entnehmen der hergestellten Sohle (10) aus der Form und Abkühlen.

12. Verfahren nach Anspruch 11, wobei nach dem Spritzgießen des ersten Sohlenelements (11) das erste Sohlenelement (11) gewaschen wird, um eine Oberfläche der Zwischensohle zu erzeugen, die etwas poröser ist.

13. Verfahren nach Anspruch 11, wobei das erste Sohlenelement (11) aus EVA hergestellt ist.

14. Verfahren nach Anspruch 11, wobei mindestens eine Einlage in die Form eingebracht wird, um eine Abflachung der strukturierten Oberfläche während des Formprozesses zu verhindern.

15. Verfahren nach Anspruch 14, wobei die Einlage eine Silikoneinlage ist.

## Revendications

1. Une semelle (10) pour une chaussure, comprenant :
un premier élément de semelle conformé (11) ; et
un second élément de semelle (12) comprenant un matériau textile ;
dans laquelle le second élément de semelle (12) est couplé au premier élément de semelle (11) et agencé de manière à recouvrir au moins partiellement le premier élément de semelle (11) ;
dans laquelle le second élément de semelle (12) est moulé autour du premier élément de semelle (11) ;
dans laquelle le second élément de semelle (12) est au moins partiellement agencé sur un côté latéral du premier élément de semelle (11) ;
dans laquelle le premier élément de semelle (11) comprend des reliefs (13, 13a, 13b) ;
dans laquelle au moins une partie du second élément de semelle (12) est configurée pour venir en contact avec une surface adjacente lorsque la semelle est montée sur une tige ;
dans laquelle la partie du second élément de semelle (12) qui vient en contact avec la surface adjacente génère un niveau d'au moins une friction ou traction entre la semelle (10) et la surface adjacente ; et
dans laquelle les reliefs (13, 13a, 13b) sont configurés pour augmenter le niveau de l'au moins une friction ou traction générée entre la semelle (10) et la surface adjacente, **caractérisée en ce que**
le premier élément de semelle (11) s'étend partiellement au travers du second élément de semelle (12).

2. La semelle (10) selon la revendication 1, dans laquelle le niveau de l'au moins une friction ou traction générée par la partie du second élément de semelle (12) est supérieur à un niveau de l'au moins une friction ou traction générée par une partie du premier élément de semelle (11) lorsque la surface adjacente est le sol ou un ballon de sport.

3. La semelle (10) selon la revendication 1, dans laquelle le second élément de semelle (12) est réalisé à partir de fils.

4. La semelle (10) selon la revendication 3, dans laquelle les fils sont à base de fibres naturelles ou synthétiques comprenant un polyester, un polyester à haute résistance, un polyamide, des fils métalliques, des fils étirés, des fils de carbone, des fils de verre, des fils de polyéthylène ou de polyoléfine, des fils bi-composant, des fils de PTFE, des fils de polyéthylène à ultra-haut poids moléculaire, des fils de polymère à cristaux liquides, des fils décoratifs spéciaux ou des fils réfléchissants, ou l'un quelconque de ces fils, revêtus d'EVA fondu à chaud, de TPU, de PU, de caoutchouc ou autrement revêtus d'un polymère.

5. La semelle (10) selon la revendication 1, dans laquelle le second élément de semelle (12) est réalisé à partir d'un textile tricoté, ou est un matériau tressé, un textile tissé, un textile non tissé, ou créé par placement de fibres sur mesure.

6. La semelle (10) selon la revendication 1, dans laquelle le second élément de semelle (12) comprend au moins une première zone (51, 55) avec moins d'étirement qu'une zone adjacente, et/ou dans laquelle le second élément de semelle (12) comprend au moins une seconde zone (53) avec plus de raideur qu'une zone adjacente, et/ou dans laquelle le second élément de semelle (12) comprend au moins une troisième zone (51) avec plus de traction qu'une zone adjacente, et/ou dans laquelle le second élément de semelle (12) comprend au moins une quatrième zone (52) avec une structure tricotée plus lâche qu'une zone adjacente, et/ou dans laquelle le second élément de semelle (12) comprend au moins une cinquième zone (54) où le second élément de semelle (12) est plus épais que dans une zone adjacente.

7. La semelle (10) selon la revendication 6, dans laquelle la semelle (10) comprend un troisième élément de semelle (83 ; 93) qui s'étend entre le premier élément de semelle (11) et le second élément de semelle (12).

8. Une chaussure comprenant une semelle (10) selon l'une des revendications précédentes.

9. Un procédé de fabrication d'une semelle (10) comprenant un premier élément de semelle conformé (11) et un second élément de semelle (12) comprenant un matériau textile, le premier élément de semelle (11) comprenant des reliefs (13, 13a, 13b), le procédé comprenant : l'accouplement du second élément de semelle (12) au premier élément de semelle (11) de telle manière que le second élément de semelle (12) soit agencé de manière à recouvrir au moins partiellement le premier élément de semelle (11) par moulage du second élément de semelle (12) autour du premier élément de semelle (11), de telle sorte que le second élément de semelle (12) soit au moins partiellement agencé sur un côté latéral du premier élément de semelle (11), et de telle sorte que le premier élément de semelle (11) s'étende partiellement au travers du second élément de semelle (12) ;
dans lequel au moins une partie du second élément de semelle (12) est configurée pour venir en contact avec une surface adjacente lorsque la semelle (10) est montée sur une tige ;
dans laquelle la partie du second élément de semelle (12) qui lequel en contact avec la surface adjacente génère un niveau d'au moins une friction ou traction entre la semelle (10) et la surface adjacente ; et
dans lequel les reliefs (13, 13a, 13b) sont configurés pour augmenter le niveau de l'au moins une friction ou traction générée entre la semelle (10) et la surface adjacente.

10. Le procédé selon la revendication 9, dans lequel le matériau textile du second élément de semelle (12) est monté sur le premier élément de semelle (11) sans aucune colle ni adhésif.

11. Le procédé selon la revendication 9, comprenant en outre :
le moulage par injection du premier élément de semelle (11) en une forme de semelle intermédiaire ;
le chauffage du premier élément de semelle (11) à 100 à 140 °C ;
la mise en place du premier élément de semelle (11) en même temps que le matériau textile du second élément de semelle (12) dans un moule à 120 à 150 °C ;
la mise sous pression du premier élément de semelle (11) et du matériau textile du second élément de semelle (12) pendant 10 à 60 secondes ; et
le retrait de la semelle obtenue (10) du moule, et son refroidissement.

12. Le procédé selon la revendication 11, dans lequel après le moulage par injection du premier élément de semelle (11), le premier élément de semelle (11) est lavé pour créer une surface de la surface intermédiaire qui soit légèrement plus poreuse.

13. Le procédé selon la revendication 11, dans lequel le premier élément de semelle (11) est réalisé en EVA.

14. Le procédé selon la revendication 11, tel qu'au moins un insert soit placé dans le moule pour empêcher l'aplatissement de la surface structurée pendant le processus de moulage.

15. Le procédé selon la revendication 14, dans lequel l'insert est un insert de silicone.
